Europäisches Patentamt

European Patent Office

Office européen des brevets

(11) Veröffentlichungsnummer: **0 412 157 A1**

## (12) EUROPÄISCHE PATENTANMELDUNG
### veröffentlicht nach Art. 158 Abs. 3 EPÜ

(21) Anmeldenummer: 88903466.6

(22) Anmeldetag: 20.01.88

(86) Internationale Anmeldenummer:
**PCT/SU88/00015**

(87) Internationale Veröffentlichungsnummer:
**WO 89/06579 (27.07.89 89/16)**

(51) Int. Cl.⁵: **B23B 31/20**

(43) Veröffentlichungstag der Anmeldung:
**13.02.91 Patentblatt 91/07**

(84) Benannte Vertragsstaaten:
**CH DE FR GB IT LI SE**

(71) Anmelder: **INSTITUT ELEKTRONIKI IMENI U.A. ARIFOVA AKADEMII NAUK UZBEXKOI SSR Akademgorodok Tashkent, 700125(SU)**

Anmelder: **SPETSIALIZIROVANNOE KONSTRUKTORSKO-TEKHNOLOGICHESKOE BJURO OPTYTNYM PROIZVODSTVOM INSTITUTA ELEKTRONIKI IMENI U.A. AKADEMII NAUK UZBEXKOI SSR Akademgorodok Tashkent, 700125(SU)**

(72) Erfinder: **VAKHIDOV, Khaidar Akhmedovich massiv Chilanzar, 2 kvartal, 23-6 Tashkent, 700115(SU)**
Erfinder: **ABDUKARIMOV, Erkin Tukhtaevich Ts-1,52-6 Tashkent, 700000(SU)**
Erfinder: **ISMAILOV, Lipilla massiv Junus-Abad, kvartal 5,11-98 Tashkent, 700093(SU)**

(74) Vertreter: **Ebbinghaus, Dieter et al Patentanwälte v. Füner, Ebbinghaus, Finck Mariahilfplatz 2 & 3 D-8000 München 90(DE)**

(54) SPANNVORRICHTUNG FÜR EINEN STAB.

�ហ Es ist eine Spannvorrichtung für einen Stab erfindungsgemäss vorgeschlagen, in deren Hohlspindel (1) eine erste und eine zweite Zange (2, 3) angeordnet sind, wobei jede der Zangen ihren eigenen Spannantrieb (5 bzw. 6) besitzt, welche Spannantriebe die unabhängige Achsbewegung einer der Zangen (3) bezüglich der anderen Zange (2) ermöglichen. Die Spannantriebe (5, 6) jeder der Zangen (2 bzw. 3) sind in der Hohlspindel (1) untergebracht und konstruktiv derart ausgebildet, dass die bei dem Spannen des Stabes (4) auftretenden Axialkräfte nach einander entgegengesetzten Seiten hin gerichtet sind.

EP 0 412 157 A1

## SPANNVORRICHTUNG FÜR EINEN STAB

Gebiet der Technik

Die vorliegende Erfindung bezieht sich auf die Metallbearbeitung und betrifft insbesondere eine Spannvorrichtung für einen Stab.

Zugrundeliegender Stand der Technik

Bei dem Räumen tiefer Löcher in Langstäben entsteht das Problem der genauen Einstellung und Längenzentrierung der letzteren.

Es ist ein Zangenspannfutter (SU, A, 1219268) bekannt, das ein Gehäuse enthält, innerhalb dessen eine Spannzange untergebracht ist, die mit einer Zugstange verbunden ist. Innerhalb des Zangenspannfutters ist eine mit der Zugstange verbundene Buchse mit federnden Buchsenarmen untergebracht, an deren Enden innen- und aussenseitig Nasen mit nach der Seite der Zugstange hin gerichteten Kegelflächen ausgebildet sind. Am Gehäuse und am Schaft der Spannzange sind Rillen ausgeführt, die zur Aufnahme der Nasen der federnden Buchsenarme bestimmt sind. Die Benutzung des Zangenspannfutters in dieser Bauart bei dem Einspannen eines Langmasswerkstücks zwecks Bearbeitung des grössten Teils seiner Länge erfordert aber die Verwendung einer Einrichtung vom Typ Lünette, die keine gemeinsame Basis mit dem Zangenspannfutter besitzt (z.B. das Zangenspannfutter wird an der Maschine in der Spindel befestigt, die Lünette aber am Bett angebracht), weshalb sich die Bearbeitungsgenauigkeit verschlechtert. Es ist auch zu berücksichtigen, daß sich die Unmöglichkeit des Anzuges eines Langmasswerkstücks vom Typ Stab auch negativ auf die Bearbeitungsgenauigkeit auswirkt. Darüber hinaus müssen hier Sonderzangen verwendet werden, was gewisse Schwierigkeiten in den Einsatz der gesamten Vorrichtung einbringt.

Es ist auch eine Spannvorrichtung für einen Stab bekannt (SU, A, 474402), die eine Spindel enthält, innerhalb welchen zwei Zangen mit einem gemeinsamen Spannantrieb untergebracht sind. Die Zangen sind miteinander starr verbunden.

Diese Vorrichtung ist aber nicht imstande, einen Langstab einzuspannen und ihn gleichzeitig zwischen den zwei Zangen zu strecken, weil diese miteinander starr verbunden sind, wodurch sich die Bearbeitungsgenauigkeit und die Oberflächengüte der Wände von hergestellten Löchern verschlechtern.

Offenbarung der Erfindung

Der Erfindung liegt die Aufgabe zugrunde, eine derartige Ausführung der Spannvorrichtung für einen Stab zu entwickeln, mit der tiefe Löcher in Stäben hergestellt und die Leistung, die Bearbeitungsgenauigkeit sowie die Oberflächengüte der Wände der hergestellten tiefen Löcher erhöht werden können.

Diese Aufgabe wird dadurch gelöst, dass bei einer Spannvorrichtung für einen Stab, die eine Hohlspindel enthält, innerhalb welcher eine erste und eine zweite Zange koaxial angeordnet sind, erfindungsgemäss jede der Zangen ihren eigenen Spannantrieb besitzt, welche Antriebe die unabhängige Achsbewegung einer der Zangen bezüglich der anderen Zange ermöglichen, wobei die Spannantriebe der Zangen in der Hohlspindel untergebracht und konstruktiv so ausgeführt sind, dass die beim Spannen des Stabes auftretenden Axialkräfte nach einander entgegengesetzten Seiten hingerichtet sind.

Der Spannantrieb der ersten Zange kann vorteilhafterweise eine Buchse darstellen, an deren einem Ende eine gegen die Achsbewegung gesicherte Mutter angebracht ist und deren zweites Ende den Schaft der ersten Zange umfasst und mit dieser durch eine Verschraubung verbunden ist, und der Spannantrieb der zweiten Zange ist zweckmässigerweise als zwei Buchsen ausgeführt, wobei eine dieser Buchsen die zweite Zange umfasst und an der Innenfläche der Hohlspindel starr befestigt ist und die zweite Buchse mit dem einen Ende den Schaft der zweiten Zange umfasst und durch eine Verschraubung mit ihm verbunden ist und an dem anderen Ende eine Mutter trägt, welche die Achsbewegung der zweiten Zange bezüglich der ersten Zange und die Einspannung des Stabes mit Anzug gewährleistet.

Durch die in der Spannvorrichtung für einen Stab vorgesehenen Spannantriebe für jede der Zangen und deren konstruktive Ausführung wird sichergestellt, dass die Einspannung des Stabes unter Angreifen von Zugkräften an diesem erfolgt, wodurch in Stäben tiefe und supertiefe Löcher mit hoher Leistung, Bearbeitungsgenauigkeit und Oberflächengüte der Löcherwände hergestellt werden können.

Kurze Beschreibung der Zeichnungen

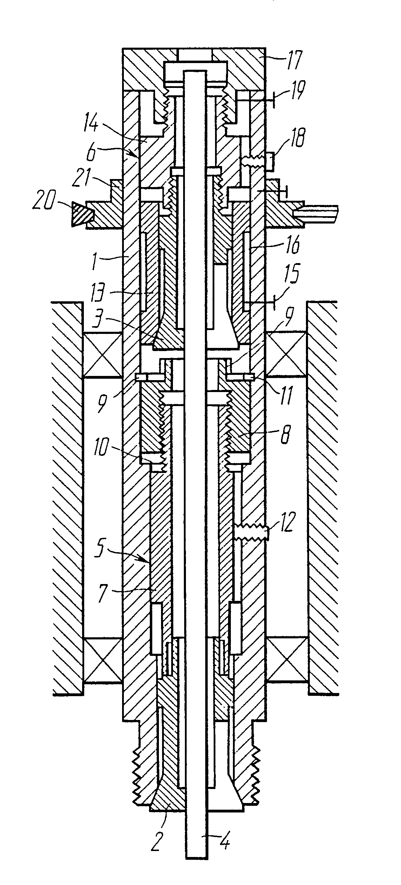

Des weiteren wird die Erfindung an Hand eines Ausführungsbeispiels unter Bezugnahme auf die beiliegende Zeichnung näher erläutert, in der eine Spannvorrichtung für einen Stab dargestellt ist.

Bevorzugte Ausführungsform der Erfindung

Die erfindungsgemässe Spannvorrichtung für einen Stab enthält eine Hohlspindel 1, in deren Innenraum zwei einen Stab 4 einzuspannenden Zangen 2 und 3 koaxial und anabhängig bewegbar untergebracht sind, wobei die erste Zange 2 in der Hohlspindel 1 auf der Vorschubseite des spanenden Werkzeuges (in der Zeichnung nicht gezeigt) angeordnet ist. Die Zange 2 steht durch ihren Kegel mit einer am Stirnende der Hohlspindel 1 ausgeführten Kegelausbohrung in Wechselwirkung. Jede der Zangen 2 und 3 ist mit ihrem eigenen Spannantrieb 5 bzw. 6 versehen. Der Spannantrieb 5 der ersten Zange 2 ist in Form einer Buchse 7 ausgebildet, die an dem einen Ende durch ein Innengewinde mit dem Schaft der ersten Zange 2 verbunden ist, wobei an deren zweitem Ende ein Aussengewinde zur Aufnahme einer Mutter 8 ausgeführt ist, die Schlitze 9 für eine spezielle Steckschlüssel aufweist und auf der einen Seite durch eine im Innenraum der Hohlspindel 1 vorhandene Schulter 10 und auf der anderen Seite durch einen Ring 11 begrenzt ist. Die Büchse 7 wird gegen Durchdrehen bezüglich der Hohlspindel 1 durch einen Stift 12 festgehalten.

An dem anderen Ende der Hohlspindel 1 ist in ihrem Innenraum auf der der ersten Zange 2 entgegengesetzten Seite die zweite Zange 3 mit ihrem Spannantrieb 6 angeordnet. Der Spannantrieb 6 ist als zwei Buchsen 13 und 14 ausgebildet. Eine der Buchsen 13 ist mittels am Umfang der Buchse 13 gleichmässig verteilt angeordneter Schrauben 15 an der Innenfläche der Hohlspindel 1 starr befestigt und umschliesst die zweite Zange 3. Zur Gewährleistung der Fertigungsgerechtheit besitzt die Buchse 13 eine Rille 16. An der Aussenfläche des Schaftes der Zange 3 ist ein Gewinde vorhanden, auf das die zweite Buchse 14 aufgeschraubt wird, während das zweite Ende der Buchse 14 ein Aussengewinde aufweist, auf das eine Mutter 17 aufgeschraubt wird. Die Buchse 14 weist eine Nut auf, in die eine Schraube 18 hineingeht, die die Buchse 14 gegen Durchdrehen innerhalb der Hohlspindel 1 festhält. Gegen spontanes Losschrauben ist die Mutter 17 mittels einer Schraube 19 gekontert. Die Hohlspindel 1 wird von einem Antrieb (in der Zeichnung nicht gezeigt) über einen Riementrieb in Drehbewegung gesetzt, dessen Riemen 20 um eine an der Aussenfläche der Hohlspindel 1 angebrachte Scheibe 21 gespannt ist.

Die Wirkungsweise der Spannvorrichtung für einen Stab ist die folgende. Vor dem Einführen des Stabes 4 in die Zange 2 werden die Schrauben 15, 18 und 19 an der Hohlspindel 1 so abgeschraubt, dass die Buchse 13 mit der zweiten Zange 3 und die Buchse 14 mit der Mutter 17 aus dem Innern der Hohlspindel 1 frei ausgehen können. Nachdem die aufgezählten Elemente aus dem Innern der Hohlspindel 1 herausgezogen sind, wird ins Innere der Hohlspindel 1 eine spezielle Steckschlüssel eingesteckt, die ein Rohr darstellt, welches an dem einen Ende einen Handgriff und an dem anderen Schlitze zum Greifen der Mutter 8 aufweist. Der Aussendurchmesser des Rohres der speziellen Steckschlüssel darf nicht den Durchmesser des Innenraumes der Hohlspindel 1 überschreiten, in den sie frei eingehen muss (in der Zeichnung nicht gezeigt). Die spezielle Steckschlüssel besitzt einen Hohlraum, inneralb dessen sich das herausragende Ende des einzuspannenden Stabes 4 frei unterbringen lassen muss. Man bringt die spezielle Steckschlüssel mit den Schlitzen 9 der Mutter 8 in Eingriff und bewegt durch Drehen der Mutter 8 die Buchse 7 in Richtung der ersten Zange 2, die dabei herausge schoben wird, indem ihre Zangenarme gespreizt werden. Nachdem die erste Zange 2 auf einen Abstand herausgeschoben worden ist, der ausreicht, um den Stab 4 durch sie frei hindurchzuziehen, wird in die spezielle Steckschlüssel der Stab eingesteckt, und zwar so, dass die Länge des Stabes 4 dessen Einspannung in der zweiten Zange 3 ermöglicht. Daraufhin wird mit der speziellen Steckschlüssel die Mutter 8 so gedreht, dass die Buchse 7, indem sie sich in die Mutter 8 einschraubt, die erste Zange 2 ins Innere der Hohlspindel 1 bis zur Stellung einziehen sollte, bei der der Stab 4 durch die Zangenarme der ersten Zange 2 zuverlässig eingespannt ist. Dann wird die spezielle Steckschlüssel aus dem Innern der Hohlspindel 1 herausgezogen. Anstatt der speziellen Steckschlüssel führt man in die Hohlspindel 1 die Buchse 13 samt der zweiten Zange 3 komplett mit der Buchse 14 samt der Mutter 17 derart ein, dass der Stab 4 in die zweite Zange 3 hineingeht. Nach dem Einbau der gesamten Elemente ins Innere der Hohlspindel 1, wie in der Zeichnung gezeigt ist, wird die Buchse 13 mit den Schrauben 15 gesichert und die Schraube 18 in die Nut der Buchse 14 so eingeschraubt, dass sich die Buchse 14 in Axialrichtung frei bewegen kann. Daraufhin beginnt man mit einer (in der Zeichnung nicht gezeigten) Schraubenschlüssel die Mutter 17 derart zu drehen, dass die Buchse 14 im Einschrauben in die Mutter 17 die zweite Zange 3 ins Innere der Buchse 13 verschiebt. Dabei entfernt sich die zweite Zange 3, indem sie den Stab 4 festspannt, von der ersten Zange 2, wodurch der Stab 4 mit Anzug gespannt wird. Nachdem der Stab 4 zuverlässig festgespannt ist, wird die Drehung der Mutter 17 beendet und diese Mutter 17 mittels der Schraube 19 gesichert. Der Antrieb wird eingeschaltet, von dem die Hohlspindel samt dem darin gespannten Stab 4 in Drehung versetzt wird. Der Stab 4 ist bearbeitungsbereit.

Das Herausziehen des Stabes 4 nach der Bearbeitung geschieht folgenderweise. Nachdem die Hohlspindel 1 zum Stillstand gebracht worden ist, schraubt man die Schrau be 19 aus, bis ihr in den Hohlraum hineinragendes Ende im Körper der Hohlspindel 1 völlig versenkt ist, und führt man einige Umdrehungen der Mutter 17 aus, damit sie von dem Stirnende der Hohlspindel 1 auf einen bestimmten Abstand abgeht. Daraufhin bewegt man die Buchse 14 und die damit verbundene zweite Zange 3 nach der Seite der ersten Zange 2, indem man der Mutter 17 einen leichten Schlag versetzt. Dadurch wird die zweite Zange 3 aus der Buchse 13 ausgeschoben, ihre Zangenarme gehen auseinander und entspannen somit den eingespannten Stab 4. Dann werden die Schrauben 15 und 18 ausgeschraubt, bis ihre in den Hohlraum hineinragenden Enden im Körper der Hohlspindel 1 völlig versenkt sind. Dann zieht man an der Mutter 17, wodurch alle mit dieser verbundenen Elemente herauskommen. Man führt die spezielle Steckschlüssel hinein und beginnt die Mutter 8 so lange zu drehen, bis die erste Zange 2 aus dem Innenraum der Hohlspindel 1 herausgeschoben ist und den eingespannten Stab 4 freigegeben hat, wonach sich der Stab 4 leicht aus dem Innenraum der Hohlspindel 1 herausziehen lässt.

Im Vergleich zu den bekannten Vorrichtungen bezitzt die erfindungsgemässe Spannvorrichtung für einen Stab eine Reihe von Vorteilen, und zwar sie gewährleistet eine hohe Zentrierungsgenauigkeit des einzuspannenden Stabes, denn die Spannstellen des Stabes befinden sich ziemlich weit voneinander, wodurch eine ausreichend starre Befestigung des Stabes gesichert ist; ausserdem haben die beiden Zangen eine gemeinsame Zentrierungsbasis, in deren Eigenschaft der Innenraum der Hohlspindel 1 auftritt. Es soll auch berücksichtigt werden, dass die Festspannung des Stabes ihm die Steifigkeit aufgrund seines Anzuges verleiht, was etwaige Schwingungen und Durchbiegungen im mittleren Abschnitt des Stabes, der zwischen den Spannarmen der beiden Zangen eingeschlossen ist, beseitigt.

Es ist auch wichtig, dass der einzuspannende Stab fast völlig in die Abmessungen der Spindel hineinpasst und nur ein geringer Teil des Stabes über das Stirnende der ersten Zange hinaustritt, so dass Werkzeugmaschinen kleinerer Abmessungen eingesetzt werden können als im Falle der Verwendung der bekannten Lösungen zur Festspannung und Bearbeitung in einer Aufnahme von Langmasswerkstücken aus Stangenmaterial. Solche Vorteile erweitern verfahrenstechnische Einsatzmöglichkeiten der erfindungsgemässen Spannvorrichtung und erhöhen gleichzeitig die Genauigkeit des im Stab herzustellenden Loches.

## Gewerbliche Anwendbarkeit

Die Spannvorrichtung für einen Stab, die zum Einbringen eines tiefen Loches in demselben vorgesehen ist, kann in der metallbearbeitenden Industrie sowie bei der elektroerosiven Bearbeitung von Maschinenteilen breit zur Anwendung kommen.

## Ansprüche

1. Spannvorrichtung für einen Stab, die eine Hohlspindel (1) enthält, innerhalb welcher eine erste und eine zweite Zange (2 bzw. 3) koaxial angeordnet sind, dadurch **gekennzeichnet**, dass jede der Zangen (2, 3) ihren eigenen Spannantrieb (5 bzw. 6) besitzt, welche Antriebe die unabhängige Achsbewegung einer der Zangen (3) bezüglich der anderen Zange (2) ermöglichen, wobei die Spannantriebe (5, 6) der Zangen (2 bzw. 3) in der Hohlspindel (1) untergebracht und konstruktiv so ausgeführt sind, dass die beim Spannen des Stabes (4) auftretenden Axialkräfte nach einander entgegengesetzten Seiten hin gerichtet sind.

2. Spannvorrichtung nach Anspruch 1, dadurch **gekennzeichnet**, dass der Spannantrieb (5) der ersten Zange (2) eine Buchse (7) darstellt, an deren einem Ende eine gegen die Achsbewegung gesicherte Mutter (8) angebracht ist und deren zweites Ende den Schaft der ersten Zange (2) umfasst und mit dieser durch eine Verschraubung verbunden ist und dass der Spannantrieb (6) der zweiten Zange (3) als zwei Buchsen (13, 14) ausgeführt ist, wobei eine dieser Buchsen (13) die zweite Zange (3) umfasst und an der Innenfläche der Hohlspindel (1) starr befestigt ist und die zweite Buchse (14) mit dem einen Ende den Schaft der zweiten Zange (3) umfasst und durch eine Verschraubung mit ihm verbunden ist und an dem anderen Ende eine Mutter (17) trägt, welche die Achsbewegung der zweiten Zange (3) bezüglich der ersten Zange (2) und die feste Einspannung des Stabes gewährleistet.

# INTERNATIONAL SEARCH REPORT

International Application No PCT/SU 88/00015

## I. CLASSIFICATION OF SUBJECT MATTER (if several classification symbols apply, indicate all)

According to International Patent Classification (IPC) or to both National Classification and IPC.

IPC⁴ B 23 B 31/20

## II. FIELDS SEARCHED

| Minimum Documentation Searched | |
|---|---|
| Classification System | Classification Symbols |
| IPC⁴ | B 23 B 31/20, B 23 H 7/22 |

Documentation Searched other than Minimum Documentation
to the Extent that such Documents are Included in the Fields Searched

## III. DOCUMENTS CONSIDERED TO BE RELEVANT

| Category° | Citation of Document, " with indication, where appropriate, of the relevant passages ¹² | Relevant to Claim No. ¹³ |
|---|---|---|
| Y | DE, B2, 2434859, (S.A. Automobiles Citroen), 29 May 1980 (29.05.80), see the claims, fig. 1 | 1-2 |
| Y | SU, A1, 118676, (P.V. Lipovetsky), 28 April 1959 (28.04.59) | 1-2 |
| A | A.M. Dalsky "Tsangovye zazhimnye mekhanizmy, 1966, Mashinostroenie, (Moscow), see page 9 | 2 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 14 July 1988 (14.07.88) | 5 October 1988 (05.10.88) |
| International Searching Authority | Signature of Authorized Officer |
| ISA/SU | |